# EUROPEAN PATENT APPLICATION

(11) **EP 2 983 371 A1**
(43) Date of publication of application: **10.02.2016**
(21) Application number: 14180093.8
(22) Date of filing: 06.08.2014
(51) Int. Cl.: H04N 21/234, H04N 21/2343, H04N 21/438

(54) **System and method for channels zapping**

(71) Applicant: Advanced Digital Broadcast S.A., 1292 Geneva (CH)
(72) Inventor: Kmiecik, Krzysztof, 65-119 Zielona Gora (PL)
(74) Representative: Blonski, Pawel

(57) **Abstract**

Method for channels zapping in a digital television receiver, the method comprising the steps of: tuning to a first data stream and a first channel; processing the first channel data; generating first channel output data; receiving a command influenc-ing the flow of the data stream is received; the method further comprising the steps of: transmitting the command to a server; receiving the command execution confirmation from the server; receiving the first data stream and the first channel wherein the content of the first channel data is modified.

## Description

The present invention relates to a system and method for channels zapping. In particular the present invention relates to improvements in channel change latency.

Prior art includes an EP2228985 (A1) publication entitled "Combined television data stream, method for displaying television channel and method for generating combined television data stream". This publication discloses a combined television data stream comprising a combined video data stream, comprising combined video frames, which comprise source video frames of at least two source television channels, the source video frames being arranged at spatially distinct sections of the combined video frames, at least two audio data streams each audio data stream comprising source audio data of one of the source television channels, description data, comprising video section descriptors, identifying the sections of the combined video frames the video section descriptors corresponding to each source television channel, and audio stream descriptors, identifying the audio data streams the audio stream descriptors corresponding to each source television channel.

A drawback of this solution is that first of all high amount of data needs to be transmitted and secondly the headend must encode this high amount of data while also generating special descriptors, which is time consuming and heavy on encoding resources.

Another prior art publication US5633683, "Arrangement and method for transmitting and receiving mosaic video signals including sub-pictures for easy selection of a program to be viewed", which is considered to be the closest prior art, presents a television video mosaic system. Disclosed therein is a "Channel Navigation System", which allows a user to get an overview of the digital programs provided, and to easily select a desired program for viewing. The method of that system includes the transmission (in a separate program of a transport stream) of a video stream representing a video mosaic picture, the sub-pictures of which are miniature versions of the video stream of other programs in that particular transport stream.

Thanks to this solution a viewer may at once preview several channels. Owing to such an overview, less channels changes are typically needed in a TV system. This is particularly useful for channel grazing. Upon selection of a channel, presented in a mosaic, tuning parameters are read and a typical channel change procedure is invoked.

Drawbacks of channel mosaics include lower video quality and a common mosaic channel audio stream. Moreover, such a mosaic is a separate television channel, which has to be transmitted in the transport stream, as defined with respect to Fig. 8 of US 5633683. Therefore the quality of the remaining channels of the transport stream has to be reduced or number of channels in one transport stream has to be decreased in order to multiplex the additional mosaic channel according to that system.

It would be advantageous to improve the channel zapping latency and present an alternative method to using mosaic streams.

The aim of the development of the present invention is an improved and cost effective method and apparatus for channels zapping.

An object of the present invention is a method for channels zapping in a digital television receiver, the method comprising the steps of: tuning to a first data stream and a first channel; processing the first channel data; generating first channel output data; receiving a command influencing the flow of the data stream is received; the method being characterized in that it further comprises the steps of: transmitting the command to a server; receiving the command execution confirmation from the server; receiving continuously the first data stream and the first channel wherein the content of the first channel data is modified in response to the command.

Preferably, the command influencing the flow of the data stream is a trick mode command wherein the command comprises: subscriber identifier, command type, identifier of a data stream and channel the subscriber is currently tuned to.

Preferably, the command influencing the flow of the data stream is a channel change command wherein the command comprises: subscriber identifier, command type, identifier of a data stream and channel the subscriber is currently tuned to.

Preferably, the content is at least audio and video content.

Preferably, the respective MPEG packet identifiers (PID) of video and audio data packets, encapsulating the first channel data, remain the same while only the content of these packets is modified.

Preferably, the server is a headend or a gateway.

Another object of the present invention is a computer program comprising program code means for performing all the steps of the computer-implemented method according to the present invention when said program is run on a computer.

Another object of the present invention is a computer readable medium storing computer-executable instructions performing all the steps of the computer-implemented method according to the present invention when executed on a computer.

Further objects of the present invention include a method for channels zapping in a digital television server, a system for channels zapping in a digital television server and a system for channels zapping in a digital television receiver.

These and other objects of the invention presented herein are accomplished by providing a system and method for channels zapping. Further details and features of the present invention, its nature and various advantages will become more apparent from the following detailed description of the preferred embodiments shown in a drawing, in which:
Fig. 1 presents a diagram of the subscriber system according to the present invention;
Fig. 2 presents a diagram of the headend system according to the present invention;
Fig. 3 presents a diagram of the subscriber method according to the present invention; and
Fig. 4 shows a diagram of the server method according to the present invention.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

### DESCRIPTION OF EMBODIMENTS

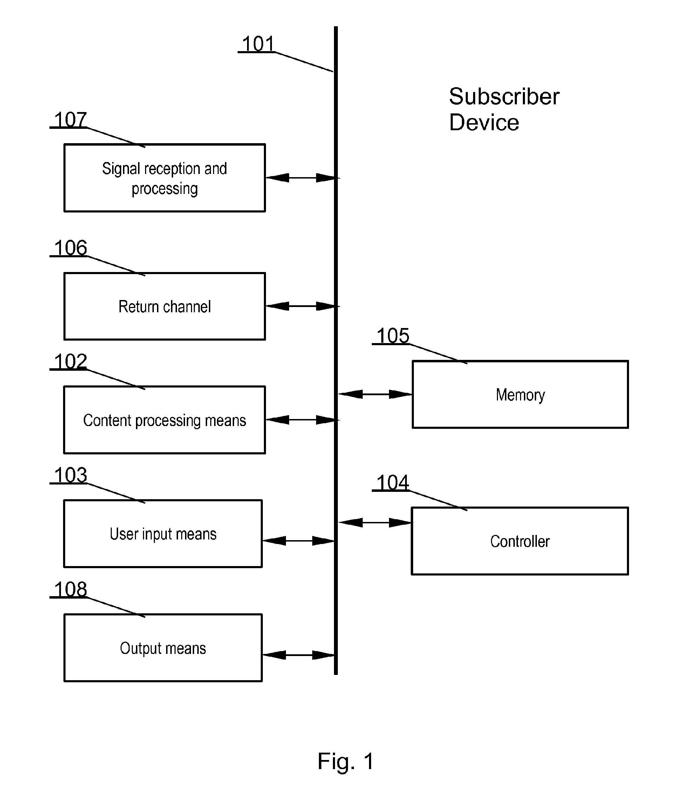

Fig. 1 presents a diagram of the subscriber system according to the present invention. The system is preferably a set-top box.

The system comprises a data bus 101 communicatively coupled to a memory 105. Additionally, other components of the system are communicatively coupled to the system bus 101 so that they may be managed by a controller 104.

The memory 105 may store computer program or programs executed by the controller 104 in order to execute steps of the method according to the present invention.

The system comprises a signal reception and processing module 107, which is responsible for receiving audio/video data that is typically organized into channels. Channels may be grouped to form a single transport stream according to MPEG standard. Switching between transport streams will typically require retuning and initial processing of a new transport stream. This results in a significant latency (channels zapping latency), which may take over 10 seconds before a user sees video and is presented with audio.

The signal reception and processing module 107 may comprise such internal modules as tuner(s), demodulator(s) configured to receive satellite, cable, terrestrial signal or the like.

When the received signal is initially processed, the content which is carried by that signal may be passed to content processing means 102. This section is responsible for descrambling, decoding and preparation for content presentation including but not limited to passing On-Screen Display layer(s) and providing the processed content to output means 108 such as a television screen or the like.

A user may influence the operation of the subscriber system by inputting commands using a user input means 103 such as a remote control unit (abbrev. RCU) a keyboard a joystick or the like. Such commands may request execution of so called trick modes in case a video on demand services or channel change commands.

Unlike in a typical subscriber system, the commands influencing the flow of the input data stream are not processed locally but instead sent via return channel means 106 to a headend system for processing. Such return channel shall be a channel providing significant transmission speed such as DOCSIS cable, xDSL line, Ethernet line in order to minimize channel zapping latency.

The commands influencing the flow of the input data stream may be send as appropriate data messages comprising for example: subscriber identifier, command type such as trick mode or channel change (includes identifier of a trick mode type or channel identifier), identifier of a data stream the subscriber is currently tuned to.

The channel identifiers may be provided by the headend (using for example PSI/SI messages in MPEG data stream), retrieved by the subscriber device and stored in the memory 105.

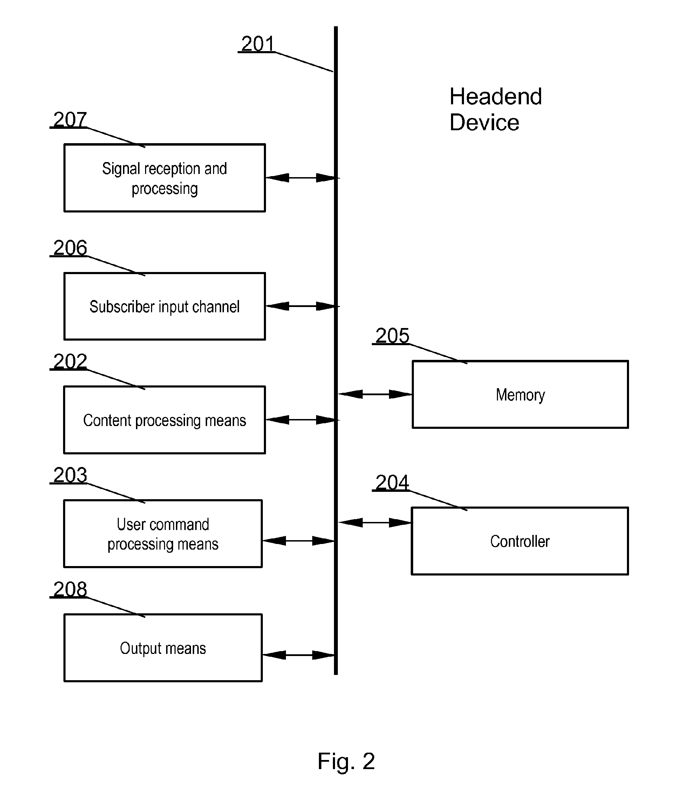

Fig. 2 presents a block diagram of the headend system according to the present invention. Such headend device may be a mini-headend implemented in a gateway device that are becoming increasingly popular. Home Gateways typically operate as mini-headends with respect to local premise subscriber devices (typically up to five local devices). In general a headend or a gateway is referred herein as a server.

The headend system comprises a data bus 201 communicatively coupled to a memory 205. Additionally, other components of the system are communicatively coupled to the system bus 201 so that they may be managed by a central controller 204.

The memory 205 may store computer program or programs executed by the controller 204 in order to execute steps of the method according to the present invention.

The system comprises a signal reception and processing module 207, which is responsible for receiving audio/video data that is typically organized into channels. Preferably, the headend comprises multiple signal reception and processing modules such that it may be simultaneously be tuned to a plurality (as many as possible) input data streams. The input data streams may be retrieved via different delivery means such as satellite, cable, terrestrial or IPTV signals. The signal reception and processing module 207 may comprise such internal modules as tuner(s), demodulator(s).

When the received signal is initially processed, the content which is carried by that signal may be passed to content processing means 202. This section is responsible for descrambling, decoding and preparation for content delivery to subscribers via output means 208 such as cable or Ethernet links or the like. The content processing may include content extraction and/or transcoding.

For example, the headend receives a terrestrial signal comprising an MPEG Transport Stream comprising Channel 1 in MPEG4 format. A subscriber is connected via a cable link to the headend and requests Channel 1 delivery in MPEG2 format. The headend must executed Channel 1 extraction from the terrestrial link and transcoding from MPEG4 format to MPEG2 format together with delivery via the cable connection.

The headend further comprises a subscriber input channel 206 configured to receive commands influencing the flow of the subscriber's data stream. Such input channel 206 shall be a channel providing significant transmission speed such as DOCSIS cable, xDSL line, Ethernet line in order to minimize channel zapping latency.

The headend further comprises a user command processing means 203 responsible for extracting commands influencing the flow of the subscriber's data stream. As previously explained such command provides subscriber identifier, command type such as trick mode or channel change (includes identifier of a trick mode type or channel identifier), identifier of a data stream the subscriber is currently tuned to.

Such information is stored in the memory 205, therefore the headend is always aware to which data streams and channels the subscribers are tuned to. For example a given subscriber is tuned to data stream 1 and channel 1 and the headend receives a command notifying that the subscriber wishes to change channel to channel 5. In such a case the headend updates the memory 205 with new channel data, retrieves channel 5 data from the content processing means 202 (the content already available due to sufficient number of signal reception and processing means 207) and feeds channel 5 data into the same data feed (data stream 1) as previous channel 1. Thus rapid channel zapping may be achieved because the subscriber device need not to retune. The channel 5 data feed includes all required descriptors such that the subscriber device is aware that channel change has been successful.

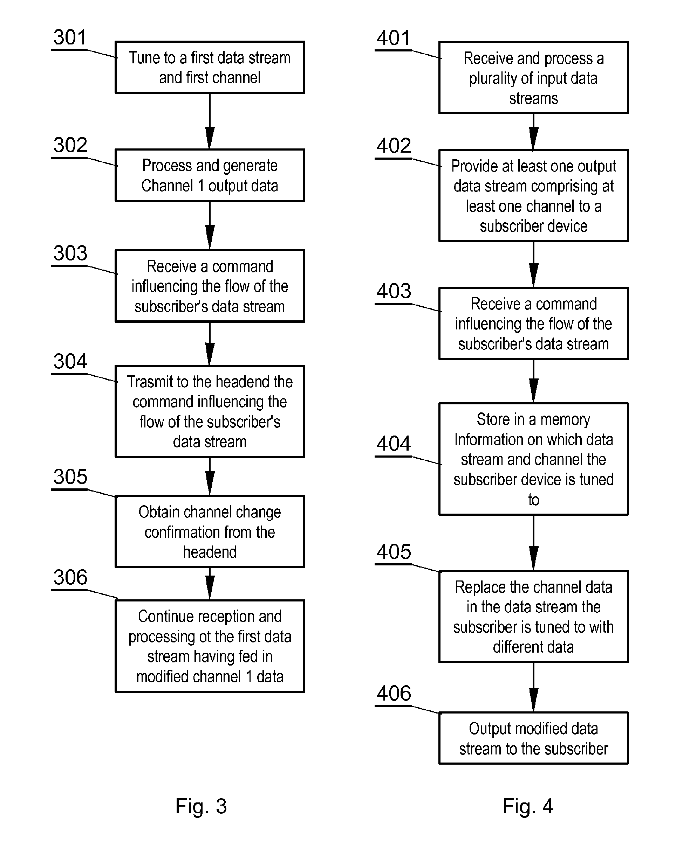

Fig. 3 presents a diagram of the subscriber method according to the present invention. The process starts at step 301 from the subscribers device tuning to a first data stream and a given first channel. Subsequently, at step 302, there are processed the first channel data and generated Channel 1 output data, for example via a HDMI output connector linked to a television set. Next, at step 303, a command influencing the flow of the subscriber's data stream is received. Such command may request channel change. Subsequently, at step 304, there is transmitted to the headend (via the return channel) the command influencing the flow of the subscriber's data stream.

Next, at step 305, there is obtained a channel change (or trick mode application) confirmation from the headend. This effectively means that Channel 1 data stream content present in the first data stream is replaced with a trick mode Channel 1 data stream content or a different Channel 2 stream content. Lastly, at step 306, the subscriber's device continues reception and processing of the first data stream having fed in modified channel 1 data. Hence, a trick mode Channel 1 data stream or a different Channel 2 stream without executing a typical retuning procedure thereby decreasing channel change latency.

For example in case of MPEG data stream, the respective packet identifiers (PID) of video and audio data packets remain the same while only the content of these packets changes.

Fig. 4 shows a diagram of the server method according to the present invention. The procedure starts at step 401 from receiving and processing a plurality of input data streams (the more the better) in order to have instant access to data. Next, at step 402, there is provided at least one output data stream comprising at least one channel to a subscriber device. At this time it is not confirmed whether a subscriber device is tuned to any data stream.

Subsequently, at step 403, there is received a command influencing the flow of the subscriber's data stream. As previously explained, such command comprises for example: subscriber identifier, command type such as trick mode or channel change (includes identifier of a trick mode type or channel identifier), identifier of a data stream the subscriber is currently tuned to.

Next, at step 404, there is stored in the memory 205 information on which data stream and channel the subscriber device is tuned to. Subsequently, at step 405, there is replaced the current channel data in the data stream the subscriber is tuned to with different data. This different data is a requested other channel or trick mode data for the current channel. Lastly, at step 406, there is output a modified data stream to the subscriber that may received the modified data stream while remaining tuned to the same data stream and while processing the same channel data stream.

The present invention, when implemented in a system comprising a gateway and four thin client devices, may dedicate one fixed channel to each of the client devices and the gateway may output one MPEG Transport Stream comprising the four fixed channels to all of the local devices. Each of the devices tunes to its dedicated channel and remains tuned to this channel during its operation as retuning is not required since the gateway will feed all the requested data into one selected fixed channel in response to commands influencing the flow of particular subscriber's data stream. Accordingly, the aforementioned four thin client devices will neither switch the processed program streams within a single transport stream nor switch transport streams.

The present invention is related to a useful result of decreased channel zapping latency in television signal reception devices. This result is measurable and is hence concrete and tangible. Therefore, the invention as described herein provides a useful, concrete and tangible result.

Further, the invention is applied in particular devices such as an improved digital television subscriber terminal and a television headend meaning that the idea underlying the invention is not abstract and is applied in particular improved machines. Thus the machine or transformation test is fulfilled.

It can be easily recognized, by one skilled in the art, that the aforementioned method for channels zapping may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory or volatile memory, for example RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. Method for channels zapping in a digital television receiver, the method comprising the steps of:
• tuning (301) to a first data stream and a first channel;
• processing (302) the first channel data;
• generating first channel output data;
• receiving (303) a command influencing the flow of the data stream is received;
the method being **characterized in that** it further comprises the steps of:
• transmitting (304) the command to a server;
• receiving (305) the command execution confirmation from the server;
• receiving (306) continuously the first data stream and the first channel wherein the content of the first channel data is modified in response to the command.

2. The method according to claim 1 **characterized in that** the command influencing the flow of the data stream is a trick mode command wherein the command comprises: subscriber identifier, command type, identifier of a data stream and channel the subscriber is currently tuned to.

3. The method according to claim 1 **characterized in that** the command influencing the flow of the data stream is a channel change command wherein the command comprises: subscriber identifier, command type, identifier of a data stream and channel the subscriber is currently tuned to.

4. The method according to claim 1 **characterized in that** the content is at least audio and video content.

5. The method according to claim 1 **characterized in that** the respective MPEG packet identifiers (PID) of video and audio data packets, encapsulating the first channel data, remain the same while only the content of these packets is modified.

6. The method according to claim 1 **characterized in that** the server is a headend or a gateway.

7. Method for channels zapping in a digital television server, the method comprising the steps of:
• receiving (401) and processing a plurality of input data streams;
• providing (402) at least one output data stream comprising at least one channel to a subscriber device;
the method being **characterized in that** it further comprises the steps of:
• receiving (403) a command influencing the flow of the subscriber's data stream, the command comprising: subscriber identifier, command type, identifier of a data stream and channel the subscriber is currently tuned to;
• storing (404) information on which data stream and channel the subscriber device is tuned to;
• replacing (405) the current channel data in the data stream with different data content;
• outputting (406) a modified data stream in response to the command.

8. The method according to claim 7 **characterized in that** the content is at least audio and video content.

9. The method according to claim 7 **characterized in that** the respective MPEG packet identifiers (PID) of video and audio data packets, encapsulating the current channel data, remain the same while only the content of these packets is modified.

10. A computer program comprising program code means for performing all the steps of the computer-implemented method according to claim 1 when said program is run on a computer.

11. A computer readable medium storing computer-executable instructions performing all the steps of the computer-implemented method according to claim 1 when executed on a computer.

12. System for channels zapping in a digital television receiver, the system comprising:
• a data bus (101) communicatively coupled to a memory (105);
• a controller (104) communicatively coupled to the data bus (101).
• a signal reception and processing module (107) configured to receive an audio/video data stream organized into at least one channel data stream;
• a content processing means (102) configured to prepare content presentation;
• an output means (108) configured to output the prepared content;
• a user input means (103) configured to receive a user command;
the system being **characterized in that** it further comprises:
• a return channel means (106) configured to send to a server a command influencing the flow of the currently received channel data stream, the command comprising: subscriber identifier, command type, identifier of a data stream and channel the subscriber is currently tuned to;
• wherein the signal reception and processing module (107) is configured to receive (305) the command execution confirmation from the server;
• whereas the signal reception and processing module (107) is configured to receive (306) the data stream and the channel data stream wherein the content of the channel data stream is modified in response to the command.

13. The method according to claim 12 **characterized in that** the respective MPEG packet identifiers (PID) of video and audio data packets, encapsulating the received channel data stream, remain the same while only the content of these packets is modified.

14. System for channels zapping in a digital television server, the system comprising:
• a data bus (201) communicatively coupled to a memory (205);
• a controller (204) communicatively coupled to the data bus (201);
• a signal reception and processing module (207) configured to receive audio/video data stream organized into at least one channel data stream;
• a content processing means (202) configured to prepare the received content for outputting via an output means (208);
• a subscriber input channel (206) configured to receive data from the subscriber;
the system being **characterized in that** it further comprises:
• the subscriber input channel (206) is configured to receive commands influencing the flow of the subscriber's data stream wherein the command comprises: subscriber identifier, command type, identifier of a data stream and channel the subscriber is currently tuned to;
• a user command processing means (203) configured to extract the commands influencing the flow of the subscriber's data stream;
• the controller (204) configured to store the information provided by the command in the memory (205);
• the controller (204) configured to, in response to the command, retrieve channel data from the content processing means (202) and feeds the retrieved data into the same channel the subscriber is currently tuned to.

15. The method according to claim 14 **characterized in that** the respective MPEG packet identifiers (PID) of video and audio data packets, encapsulating the subscriber's data stream, remain the same while only the content of these packets is modified.
